# EUROPÄISCHE PATENTSCHRIFT

(11) **EP 3 677 351 B1**
(45) Veröffentlichungstag und Bekanntmachung des Hinweises auf die Patenterteilung: **14.12.2022**
(21) Anmeldenummer: 19220033.5
(22) Anmeldetag: 30.12.2019
(51) Int. Cl.: B09B 1/00, B30B 9/30

(54) **PENDELARM FUER EINEN WALZENVERDICHTER ZUM VERDICHTEN VON ABFALLSTOFFEN IN EINEM OBEN OFFENEN CONTAINER**
PENDULUM ARM FOR A ROLLER COMPACTOR FOR COMPACTING WASTE MATERIALS IN A CONTAINER WITH AN OPEN TOP
BRAS DE PENDULE POUR UN COMPRESSEUR À ROULEAUX PERMETTANT DE COMPRIMER DES DÉCHETS DANS UN CONTENEUR OUVERT

(30) Priorität: 01.01.2019 DE 102019100001
(43) Veröffentlichungstag der Anmeldung: 08.07.2020
(73) Patentinhaber: Heinz Bergmann oHG, 49762 Lathen (DE)
(72) Erfinder: Bergmann, Heinz, 49762 Lathen (DE)
(74) Vertreter: Tarvenkorn, Oliver

(56) Entgegenhaltungen:
- EP-A1- 0 106 268
- EP-A1- 2 808 161
- DE-C1- 3 023 508
- DE-U1-202011 000 241

## Beschreibung

Die Erfindung betrifft einen Pendelarm für einen Walzenverdichter zum Verdichten von Abfallstoffen in einem oben offenen Container, mit den Merkmalen des Oberbegriffs des Anspruchs 1.

EP 0 106 268 A1 zeigt eine Abfallverdichtungsvorrichtung, bei der ein etwa zylindrischer Behälter vorgesehen ist, in dessen Zentrum eine Achse angeordnet ist. Ein angetriebener Walzenkörper ist senkrecht zu der Achse angeordnet. Er wird drehangetrieben und läuft um die Achse auf einer Kreisbahn im Behälter.

Ein weiterer Walzenverdichter wurde von der Anmelderin erstmals in der DE 30 23 508 C1 beschrieben. Eine Walze, die am Ende eines gelenkig gelagerten Pendelarms geführt ist, bewirkt die Verdichtung. Die Rotation der Walze führt zur Umschichtung der oberflächennahen Schichten der Abfälle im Container und ermöglicht deren Bewegung in Längsrichtung des Containers. Der Walzenverdichter ist insbesondere für trockene Abfälle mit großen Hohlräumen wie Sperrmüll oder Holzkisten gut geeignet. Das Fassungsvermögen des Containers wird gegenüber unverdichteten Abfällen erheblich gesteigert. In weiteren Fortentwicklungen, wie sie beispielsweise in der DE 20 2011 000 241 U1 und EP 2 808 161 A1 beschrieben sind, ist der Trägerarm jeweils auf einem Stativ außerhalb des Containers positioniert, um das gesamte Containervolumen für Abfälle nutzen zu können. Auch ist es dadurch möglich, einen stationären Walzenverdichter mit mehreren Wechselcontainern zu verwenden. Dabei ist ein zweiteiliger Knickarm vorgesehen. Der erste, mit dem Stativ verbundene Teil des Knickarms kann über einen Aktor, wie beispielsweise einen Hydraulikzylinder, angehoben werden, um die Walze aus dem Container auszuheben. Über ein Schwenkgelenk ist an seinem anderen Ende ein Pendelarm angebunden, an dessen Ende wiederum die rotierbare Walze gelagert ist. Diese bewirkt die Verdichtung allein aufgrund ihres Eigengewichts, also ohne Anpressdruck seitens des Arms. Der Antrieb der Walzenkörper erfolgt bisher über einen Hydromotor. Dazu muss eine leistungsstarke Hydraulikpumpe neben dem ortsfesten Teil des Walzenverdichters aufgestellt werden. Eine Hydraulikleitung wird von dort über den zweiteiligen Knickarm, von dem der Pendelarm einen Endabschnitt bildet, bis zum dem Hydromotor im Inneren der Walzeneinheit geführt. Entsprechend der großen Länge der hydraulischen Zu- und Ablaufleitungen muss ein großes Volumen an Hydraulikflüssigkeit vorrätig gehalten und im Betrieb umgewälzt werden. Bei einer Drehrichtungsumkehr der Walzenkörper werden Drosselventile benötigt, um den Nachlauf zu bremsen. Aufgrund der großen Trägheitsmomente, die von den Walzenkörpern ausgehen, werden diese zudem stark belastet. Die Hydraulikflüssigkeit erwärmt sich entsprechend, wodurch die Viskosität sinkt und die über die Walzeneinheit in die Abfallschüttung einbringbare Leistung sinkt. Daher muss entweder eine zusätzliche Temperierung im Ölkreislauf vorgesehen werden, oder es sind regelmäßige Betriebsunterbrechungen zur Abkühlung erforderlich. Gerade bei der Verwendung des Walzenverdichters in Recyclinghöfen in der Nähe von Wohngebieten wirkt die Geräuschentwicklung des Hydraulikaggregates störend. Schließlich ist die Montage oder Demontage der Walzeneinheit zeitaufwändig, da unter anderem der Ölkreislauf entleert bzw. befüllt werden muss, bevor die Hydraulikleitungen entfernt werden können und die mechanische Verbindung der Walzeneinheit gelöst werden kann.

Die Aufgabe der Erfindung besteht somit darin, einen Pendelarm der eingangs genannten Art so zu verbessern, dass die genannten Nachteile beim Antrieb der Walze beseitigt werden.

Diese Aufgabe wird durch einen Pendelarm für einen Walzenverdichter mit den Merkmalen des Anspruchs 1 gelöst.

Dieser Pendelarm ist eine autarke Einheit, so dass er gut zur Umrüstung vorhandener Walzenverdichter mit einem Pendelarm eingesetzt werden kann. Zusammen mit einem Stativ und einem wenigstens einteiligen Tragarm bildet er einen kompletten Walzenverdichter.

Der Vorteil besteht insbesondere in der Verwendung eines elektrischen Antriebs, wobei der Motor im Pendelarm angeordnet ist und in der Walzeneinheit ein Getriebe zur Herabsetzung der Drehzahl ausgebildet ist. Da ein Elektromotor der erforderlichen Leistungsklasse von etwa 3 bis 7,5 kW für eine Drehzahl von etwa 1500 min-1 ausgelegt ist, jedoch die Walzenkörper mit circa 6 bis 15 min-1 sehr langsam laufen, ist eine starke Untersetzung im Getriebe erforderlich.

Die Umrüstung auf einen elektrischen Antrieb hat den Vorteil, dass nur eine elektrische Steuer- und Versorgungsleitung durch den Knickarm bis zur Walze geführt zu werden braucht, welche schon allein einen kleineren Querschnitt hat als eine der beiden Hydraulikleitungen im Stand der Technik. Über einen Frequenzumrichter kann die Drehzahl der Walze während des Betriebs angepasst werden. Erstmalig ist bei einem Walzenverdichter eine Messung der momentanen Antriebsleistung möglich, durch welche in einer Steuerungseinheit Rückschlüsse auf das gerade bearbeitete Gut gezogen werden können und der Bearbeitungsgang des Walzenverdichters im laufenden Betrieb angepasst werden kann.

Der Nachlauf der Walzenkörper beim Abschalten des Antriebs wird bereits durch das Getriebe reduziert. Zusätzlich kann in bekannter Weise am Elektromotor selbst gebremst werden. Aufgrund der festen Kopplung von Elektromotor und Getriebe kann in der Steuerung die momentane Drehzahl wie auch der Nachlauf der Walzenkörper leicht erfasst werden, ohne dass dafür Drehzahlsensoren notwendig wären.

Die besondere Herausforderung bei der Umrüstung einer Walzeneinheit für einen Walzenverdichter besteht darin, dass dieser nur ein sehr flaches Getriebehalterelement besitzen darf, das zwischen den Walzenkörpern anzuordnen ist und daher kaum mehr als eine doppelte Blechstärke dick sein darf. Das Getriebehalterelement ist so schmal wie möglich ausgebildet, damit die Unterbrechung zwischen den im Wesentlichen zylindrischen Walzenkörpern - und damit der Anteil der Umfangsfläche, über die der Walzenverdichter nicht auf die Abfälle einwirken kann - möglichst gering ist.

Eine sich radial bis zur Walzenaußenseite erstreckende und - von außen gesehen - axial zwischen den Walzenkörpern angeordnete Antriebs- und Getriebeeinheit wäre zu breit und würde zu Störungen bei der Abfallbearbeitung führen, weil in dem nicht rotierenden Bereich zwischen den Walzen Abfall nicht erfasst werden könnte.

Daher sieht die Erfindung vor, dass bis auf die schmalen randseitigen Abschnitte des Getriebehalterelements, die zwischen den Walzenkörpern herausragen müssen, um einen Anschluss an den Pendelarm herzustellen, alle Teile des Getriebes innerhalb des jeweiligen Hohlraums der benachbarten Walzenkörper untergebracht werden. Dies sind unter anderem die Abtriebswelle, die Lager dafür, sowie Flansche, an denen die Walzenkörper befestigt sind. Für die Unterbringung eines herkömmlichen Elektromotors mit angeflanschtem Getriebe bleibt innerhalb des Hohlraums der Walzenkörper zu wenig Bauraum übrig.

Außerdem besteht eine spezifische Anforderung bei einem Pendelarm für einen symmetrisch aufgebauten Walzenverdichter mit Walzenkörpern beidseits des Getriebehalterelements darin, dass die Masseverteilung in Bezug auf eine durch das Getriebehalterelement verlaufende Achse ausgewogen sein muss. Denn der Pendelarm arbeitet frei am Tragarm hängend nur über die Rotation der Walze. Es können also über den Knickarm, von dem der Pendelarm einen Teil bildet, keine seitlichen Abstützkräfte aufgebracht werden. Eine falsche Massenverteilung in der Walzeneinheit führt zu einer seitlichen Biegemomentbelastung des Schwenkgelenks zwischen Pendelarm und Tragarm, das für solche Belastungen nicht ausgelegt werden kann, ohne die Grundkonstruktion des Walzenverdichters vollständig zu ändern.

Daher sieht die erfindungsgemäße Lösung vor, den Elektromotor nicht in der Walzeneinheit, sondern im Pendelarm anzuordnen, und zwar achsparallel zu oder sogar fluchtend mit dessen Mittelachse, und außerdem möglichst tief am Pendelarm. Das Getriebe wird vom Motor abgesetzt innerhalb wenigstens eines Hohlraums in den Walzenkörpern angeordnet und bildet mit dem Getriebehalterelement eine hinsichtlich der Massenverteilung ebenfalls ausgewogene Einheit.

Weiterhin sieht die Erfindung vor, das Getriebe an einem Flansch, der sich um eine zentrale Ausnehmung im Getriebehalterelement herum erstreckt, zu befestigen. Das Getriebe ist damit genau zentral in der Walzeneinheit positioniert.

Möglich ist auch, das Getriebe und den zwischen den Walzenkörpern befindlichen Teil des Getriebehalterelements zu einer Einheit zu verschmelzen, also beispielsweise das Getriebehalterelement als eine Hälfte eines Getriebegehäuses auszubilden.

Die Übertragung der Antriebsleistung zwischen Motor und Getriebe erfolgt bevorzugt über eine Antriebswelle. Angesichts der meist erforderlichen starken Untersetzung im Getriebe ist das antriebsseitige Drehmoment eher gering, so dass die Antriebswelle insbesondere so dünn ausgebildet werden kann, dass sie in einer Aussparung in dem flächigen Teil des Getriebehalterelements geführt werden kann, ohne seitlich aus diesem heraus zu ragen. Diese Führung der Antriebswelle betrifft insbesondere den Abschnitt des Getriebehalterelements zwischen dem Ende des Pendelarms und dem Eintritt in die Walzeneinheit zwischen den Walzenkörpern.

Um die meist notwendige hohe Untersetzung erzielen zu können, ist eine besonders platzsparende Bauweise des Getriebes notwendig, da ja nur ein begrenzter Öffnungsquerschnitt innerhalb des Hohlraums der Walzenkörper zur Verfügung steht. Als erste Maßnahme wird bei einer bevorzugten Ausführungsform eines Getriebes ein erstes Zahnrad direkt mit der durchgängigen Abtriebswelle verbunden, welche durch das Getriebe und das Getriebehalterelement hindurchführt, und zwar werden das Stirnrad wie auch das dort eingreifende Ritzel zwischen den Lagern der Abtriebswelle positioniert.

Weiterhin wird bevorzugt ein Kegelradpaar im radialen Randbereich des Getriebegehäuses angeordnet. Die Rotation der Antriebswelle wird bereits dort um 90° umgelenkt, so dass alle folgenden Getriebestufen im Getriebe achsparallel zur Abtriebswelle ausgerichtet werden können.

Die Getriebestufen besitzen vorzugsweise jeweils ein Zahnrad und ein Ritzel auf einer gemeinsamen Welle. Zahnrad und Ritzel sind jeweils abwechselnd auf verschiedenen Seiten der durch das Getriebehalterelement definierten Mittelebene positioniert.

Die bevorzugte Ausführungsform der Erfindung sieht eine satellitenförmige Anordnung der Getriebestufen vor, das heißt, diese sind in dem Ringraum zwischen dem Außenumfang der Abtriebswelle und dem Innenumfang des Hohlraums in den Walzenkörpern nebeneinander angeordnet. "Nebeneinander" bedeutet hierbei nicht die Anordnung in linearer Weise, sondern - in der Seitenansicht auf das Getriebe gesehen - entlang eines bogenförmigen oder sonstwie gekrümmten Pfades. Nach der Erfindung erstreckt sich beispielsweise bei einem Getriebe mit drei Untersetzungsstufen diese Anordnung zwischen der ersten Getriebestufe, welche direkt an der Abtriebswelle angreift, und der Eintrittsöffnung am Getriebegehäuse für die Antriebswelle über ca. 60° bis 80°. Von der möglichen radialen Ausdehnung innerhalb des Walzenkörpers werden von dem genannten Sektor des Getriebes mit den satellitenförmig angeordneten Getriebestufen nur etwa 50% bis 80% belegt. Entsprechend verbleibt ein ausreichend breiter, ringförmiger Bereich am Getriebehalterelement, der sich um die zentrale Ausnehmung herum erstreckt, um die Festigkeit des Getriebehalterelements nicht zu gefährden.

Die Erfindung wird nachfolgend anhand eines Ausführungsbeispiels, das in den Zeichnungen dargestellt ist, näher erläutert. Die Figuren zeigen im Einzelnen:
- Fig. 1: einen Walzenverdichter zur Verdichtung von Abfallstoffen in seitlicher Ansicht;
- Figur 2: einen erfindungsgemäßen Pendelarm mit Walzeneinheit in Ansicht von oben;
- Figur 3A: den Pendelarm mit Walzeneinheit in seitlicher Ansicht;
- Figur 3B: ein vergrößertes Detail aus Figur 3A;
- Figur 4: eine seitliche Ansicht auf ein Getriebe mit Blick auf die Mittelebene;
- Figur 5: eine Steckkupplung am Getriebe im Schnitt; und
- Figur 6: ein Getriebehalterelement in perspektivischer Ansicht.

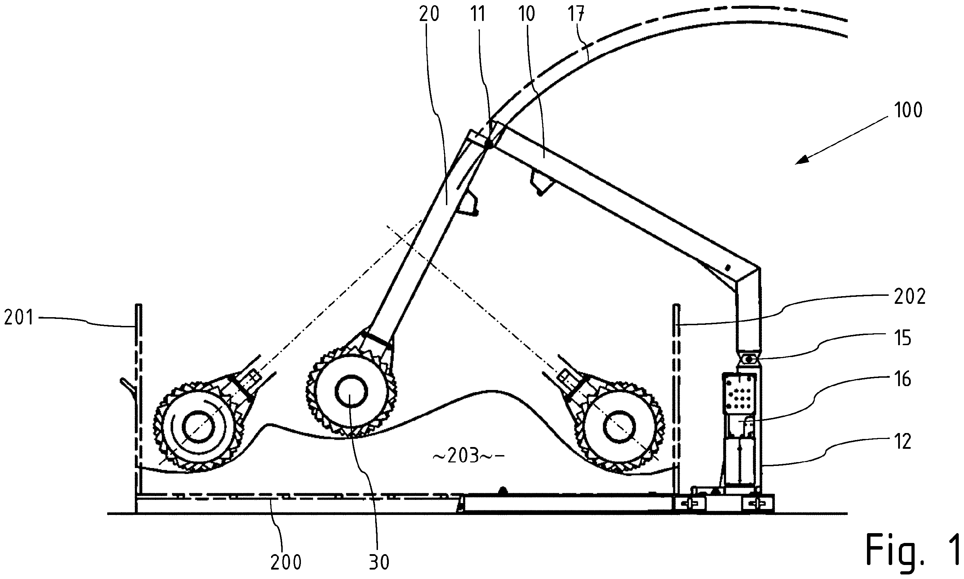

Figur 1 zeigt einen Walzenverdichter 100 zur Verdichtung von Abfallstoffen 203. Ein Container 200 besitzt eine vordere Stirnwand 201 und eine rückwärtige Stirnwand 202. Die Linie im Container 200 kennzeichnet die Oberseite von Abfallstoffen 203, die darin aufgeschichtet sind. Hinter der rückwärtigen Stirnwand 202 ist ein Stativ 16 des Walzenverdichters 100 angeordnet, welches mit nach vorne springenden Kufen bis unter den Boden des Containers 200 reicht, um die Abstützung zu verbessern. Ein Tragarm 10 ist über ein Gelenk 15 mit dem Stativ 12 verbunden. Am oberen Ende des Tragarms 10 ist über ein Gelenk 11 ein Pendelarm 20 angebunden. Zwischen Tragarm 10 und Pendelarm 20 sind keine Aktoren vorgesehen, sodass der Pendelarm 20 frei um das Gelenk 11 schwenken kann. Am Ende des Pendelarms 20 ist ein Getriebehalterelement angebracht, welches unter anderem Lagerelemente und ein Getriebe für eine Walzeneinheit 30 enthält, um eine Walze 31 anzutreiben. Außerdem ist zwischen dem Stativ 12 und dem Tragarm 10 ein hier nicht dargestellter Hubzylinder als Aktor vorgesehen, um den Tragarm 10 anheben und senken zu können. Mit dem Anheben und Senken des Tragarms 10 bewegt sich das Gelenk 11 auf einer kreisbogenförmigen Bahn 17.

In Figur 1 ist in der Nähe der Stirnwände 201, 202 jeweils das Ende des Pendelarms 20 mit der Walzeneinheit 30 nochmal abgebildet. Dies sind die Endpositionen, die die Walzeneinheit 30 erreichen kann, indem sich der Tragarm 10 gegenüber dem Stativ 16 bewegt, wodurch die Gelenkachse 11 auf der Kreisbahn 17 bewegt wird. Über den Tragarm 10 wird keinerlei Anpresskraft ausgeübt, d. h., die Verdichtung der Abfallstoffe 203 im Container 20 erfolgt allein aufgrund der Rotation und der Masse der Walzeneinheit 30 sowie den am Außenmantel der Walzen angebrachten, scharfkantigen Stegelementen zum Fördern und Brechen der Abfallstoffe.

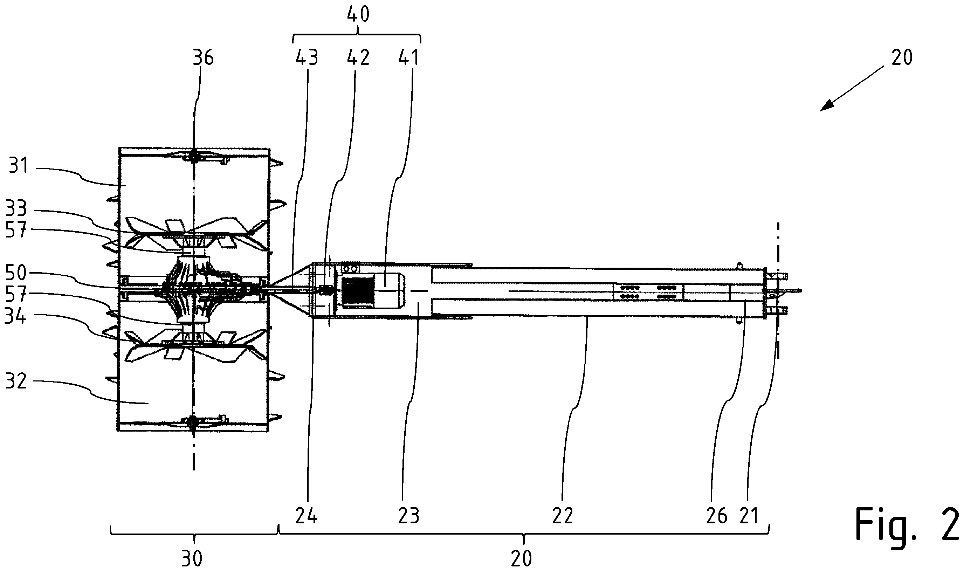

Die Erfindung bezieht sich insbesondere auf den Pendelarm 20 samt Walzeneinheit 30 des Walzenverdichters 100. Der Pendelarm 20 ist in Figur 2 separat dargestellt, und zwar in Ansicht von oben auf eine Mittelachse 36 der Walzeneinheit 30. Der Pendelarm 20 umfasst zwei äußere Trägerprofile 22, die sich an ein gemeinsames Kopfelement 26 anschließen, welches Lageraufnahmen 21 zur Ausbildung des Schwenklagers 11 besitzt. Am anderen Ende schließt sich ein gemeinsames Fußelement 23 an, das hohl ausgebildet ist, und im Inneren einen Elektromotor 41 aufnimmt. Das Fußelement 23 besitzt an der von den Trägerprofilen 22 abgewandten Seite einen Verbindungsflansch 24, an dem das Getriebehalterelement 25 befestigt ist.

Der Pendelarm 20 nach der Erfindung besitzt eine Motoreinheit 40, die neben dem Elektromotor 41 eine Ausgleichskupplung 42, eine Antriebswelle 43 und eine in Fig. 2 nicht sichtbare Steckkupplung besitzt.

Die Walzeneinheit 30 umfasst die Walzenkörper 31, 32, die an Flanschen 33, 34 einer Abtriebswelle 57 befestigt sind. Die beiden Walzenkörper 31, 32 bilden zusammen einen nahezu ununterbrochenen Zylinderkörper, in dessen Innerem ein Teil des Getriebehalterelements 25 aufgenommen ist, an dem wiederum das Getriebe 50 befestigt ist.

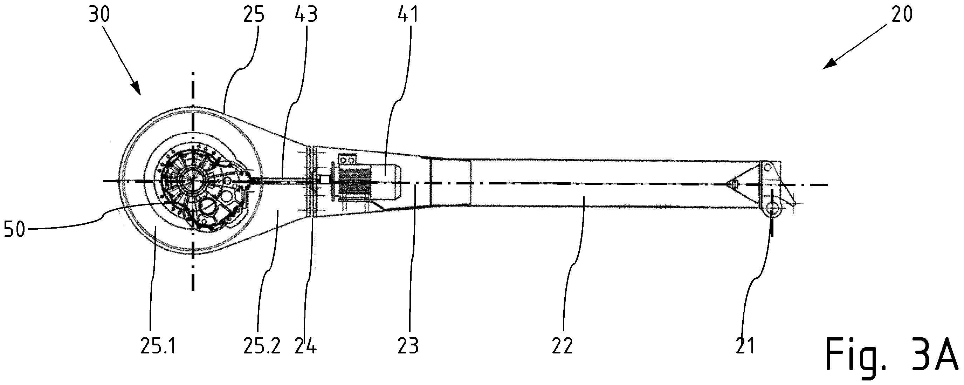

Figur 3A zeigt den Pendelarm 20 mit der Walzeneinheit 30 in seitlicher Ansicht. Daraus wird insbesondere die Kontur des Getriebehalterelements 25 mit einem ringscheibenförmigen Bereich 25.1 deutlich, der sich um eine zentrale Ausnehmung erstreckt, an welcher das Getriebe 50 angesetzt ist. Der ringscheibenförmige Bereich 25.1 läuft zum Pendelarm 20 hin in einem trapezförmigen Bereich 25.2 aus.

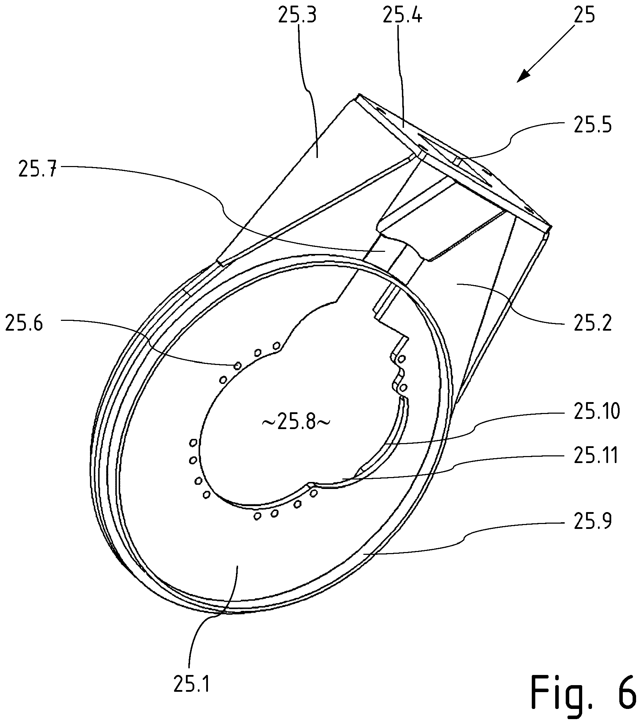

Das Getriebehalterelement 25 ist in Figur 6 in einer perspektivischen Ansicht einzeln dargestellt. Der ringscheibenförmige Bereich 25.1 und der trapezförmige Bereich 25.2 sind aus zwei Blechzuschnitten 25.10, 25.11 gebildet, wovon der Blechzuschnitt 25.11 einen Flansch für das Getriebe aufweist und der daran anliegende Blechzuschnitt 25.10 etwas weiter ausgespart ist, um das Getriebegehäuse ungehindert an den Flansch ansetzen zu können. Am Bereich 25.1 sind beidseits ringförmige Stege 25.9 angebracht. Diese ragen bis in den inneren, hohlen Teil der Walzenkörper, um den Spalt zwischen Walzenkörper und Getriebehalterelement 25 zu überdecken. Der ringscheibenförmige Bereich 25.1 schließt eine Ausnehmung 25.8 zur Aufnahme des Getriebes ein. Die Ausnehmung 25.8 setzt sich im trapezförmigen Bereich 25.2 als schmale Ausnehmung 25.7 fort, in welcher die Antriebswelle aufgenommen werden kann. Das Ende des trapezförmigen Bereichs 25.2 ist durch eine Flanschplatte 25.4 abgeschlossen, die eine Ausnehmung 25.5 zur Durchführung der Antriebswelle enthält. Verstärkungsbleche 25.3 dienen zur Verstärkung des Getriebehalterelements 25 gegenüber Biegekräften, die zwischen dem Pendelarm 12 und der Walzeneinheit 30 wirken.

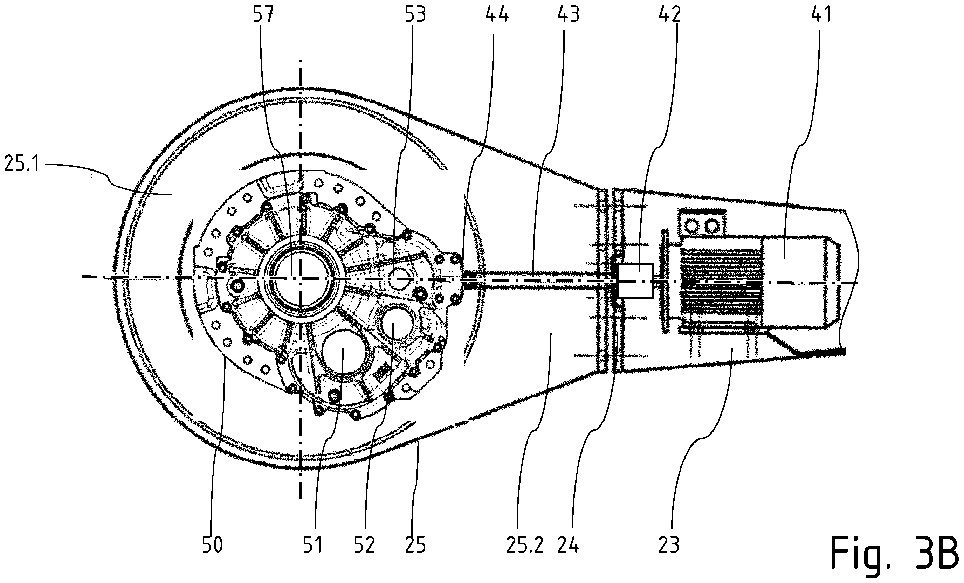

In Figur 3B ist als Vergrößerung aus Figur 3 die Walzeneinheit 30 mit dem Getriebe 50 detailliert dargestellt. Die Antriebswelle 43 verläuft vom Motor 41 über eine Ausgleichskupplung 42, wie beispielsweise eine Klauenkupplung, bis zu einer Steckkupplung 44. Falls die Walzeneinheit 30 zu Wartungszwecken getauscht werden muss, braucht lediglich eine mechanische Verbindung am Flansch 24 gelöst werden. Alsdann kann die Walzeneinheit 30 komplett vom Pendelarm 20 abgenommen werden, ohne dass der Motor 41 oder dorthin führende Steuerungs- und/oder Energieversorgungsleitungen gelöst zu werden brauchen. Auch an der Walzeneinheit 50 braucht nichts ausgebaut zu werden. Bei der späteren Montage muss lediglich das Ende der Antriebswelle 43 wieder passgenau in die Steckkupplung 44 am Getriebe 50 eingeführt werden und die Verbindung am Flansch 24 wiederhergestellt werden.

Das Getriebe 50 nimmt die Abtriebswelle 57 auf und besitzt auch Lagerungen dafür, so dass die Abtriebswelle 57 und das Getriebe 50 eine Einheit bilden. An der Außenseite des Gehäuses des Getriebes 50 sind aufgrund der dort angebrachten Wartungsdeckel insgesamt drei Getriebestufen 51, 52, 53 von außen erkennbar. Charakteristisch für die bevorzugte Ausführungsform der Erfindung ist die satellitenförmige Anordnung der Getriebestufen 51, 52, 53 um die zentrale Abtriebswelle 57 herum.

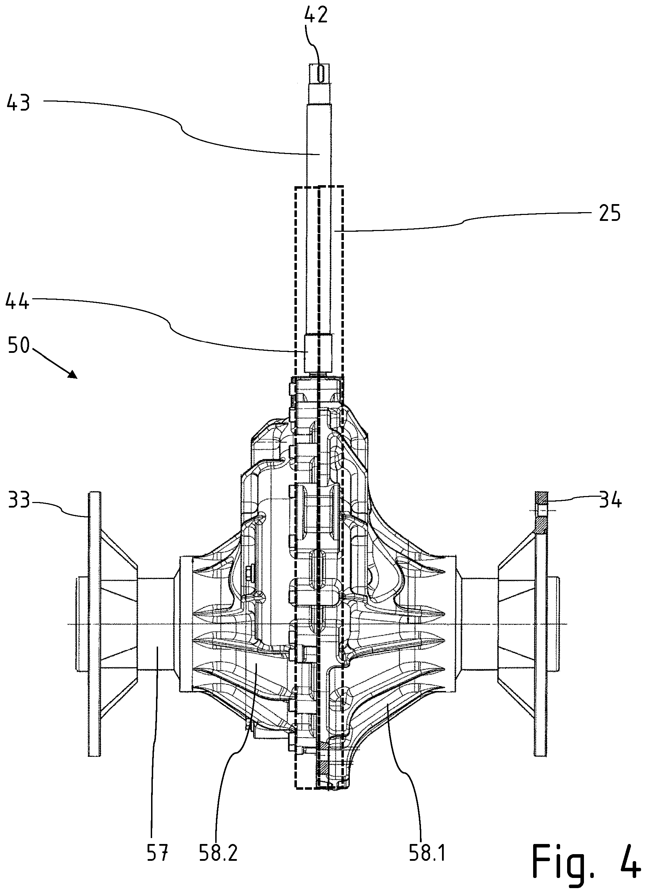

Figur 4 stellt eine Seitenansicht auf ein Getriebe 50 dar. Das Getriebe 50 hat zwei Gehäusehälften 58.1, 58.2, die miteinander verschraubt sind. Die Trennebene dazwischen stimmt mit der Mittelachse der Antriebswelle 43 überein. Die gestrichelten Linien kennzeichnen die Lage des Getriebehalterelements 25, das im Wesentlichen aus zwei Blechzuschnitten besteht, deren Verbindungsebene mit der genannten Trennebene und der Mittelachse übereinstimmt. Aus dem Gehäuse des Getriebes 50 ragen beidseits Teile der Abtriebswelle 57 heraus. Deren Enden sind jeweils mit einem Flansch 33, 34 versehen, an denen später die Walzenkörper angebracht werden.

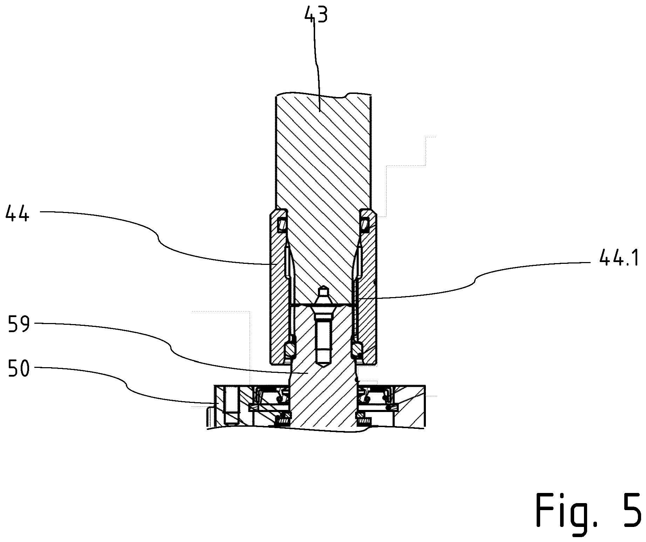

Figur 5 zeigt in einem Detailausschnitt die Steckkupplung 44 am Getriebe 50. Eine kurze Eintrittswelle 59 ragt oben aus dem Getriebegehäuse heraus. Die Steckkupplung 44 besitzt zur Drehmomentübertragung auf die Wellen 43, 59 wenigstens ein Formschlussmittel wie beispielsweise eine Passfeder 44.1. Ansonsten sind nur Dichtringe in der Steckkupplung 44 vorgesehen, um das Eindringen von Schmutz zu vermeiden. Eine entsprechende Formgebung an den Enden der Wellen 43, 59 verhindert eine zu weit gehende axiale Lageänderung der Steckkupplung. Eine form- oder kraftschlüssige Sicherung zwischen den Enden der Wellen 43, 59 und der Steckkupplung 44 in axialer Richtung ist aber nicht vorgesehen, um die Montage und Demontage der Walzeneinheit 30 am bzw. vom Pendelarm 20 zu erleichtern.

## Patentansprüche

1. Pendelarm (20) für einen Walzenverdichter (100) zum Verdichten von Abfallstoffen (203) in einem oben offenen Container (200),
wenigstens umfassend:
- ein an einem oberen Ende angeordnetes Schwenkgelenk (11) zur frei schwenkbaren Anbindung des Pendelarms (20) an einen Tragarm (10) des Walzenverdichters (100);
- eine Walzeneinheit (30), die an einem Getriebehalterelement (25) an einem unteren Ende des Pendelarms (20) angeordnet ist und die wenigstens zwei rotierbare Walzenkörper (31, 32) besitzt, welche beidseits des Getriebehalterelements (25) angeordnet und innen wenigstens teilweise hohl ausgebildet sind und welche wenigstens eine Abtriebswelle (57) und deren Lager wenigstens teilweise umschließen,
- und eine Motoreinheit;
**dadurch gekennzeichnet,**
- **dass** die Motoreinheit (40) einen Elektromotor (41) enthält, der am Pendelarm (20) angeordnet ist und der über ein Übertragungselement mit einem Getriebe (50) verbunden ist,
- **dass** das Getriebe (50) innerhalb der Walzenkörper (31, 32) angeordnet ist und am Getriebehalterelement (25) befestigt oder in das Getriebehalterelement (25) integriert ist.

2. Pendelarm (20) nach Anspruch 1, **dadurch gekennzeichnet, dass** das Übertragungselement eine Antriebswelle (43) ist, die parallel zur Mittelachse des Pendelarms (20) angeordnet ist oder damit fluchtet.

3. Pendelarm (20) nach Anspruch 1 oder 2, **dadurch gekennzeichnet, dass** der Elektromotor (41) am Ende des Pendelarms (20) angeordnet ist.

4. Pendelarm (20) nach einem der vorhergehenden Ansprüche, **dadurch gekennzeichnet, dass** der Pendelarm (20) wenigstens zwei parallele und miteinander verbundene Trägerprofile (22) umfasst, die an einem Ende mit einer Kopfeinheit (26) verbunden sind, an welchem Aufnahmen (21) zur Ausbildung eines Schwenkgelenks (11) vorgesehen sind, und die an dem andere Ende mit einer Fußeinheit (24) verbunden ist, in welcher der Elektromotor (41) angeordnet ist

5. Pendelarm (20) nach Anspruch 4, **dadurch gekennzeichnet, dass** eine Rotorwelle des Elektromotors (41) parallel zur Mittelachse des Pendelarms (20) angeordnet ist oder damit fluchtet.

6. Pendelarm (20) nach einem der Ansprüche 2 bis 5, **dadurch gekennzeichnet, dass** das Getriebe (50) ein Zahnradgetriebe ist, das wenigstens umfasst:
- eine Eingangsstufe, in welcher die Antriebswelle (43) mündet und welche ein Kegelradpaar aufweist und
- eine erste Getriebestufe (51) mit einem Zahnrad, das mit der Abtriebswelle (57) verbunden ist, und mit einem darin eingreifenden Ritzel, wobei die erste Getriebestufe (51) außerhalb der Abtriebswelle (57) und innerhalb eines Innenumfangs der Walzenkörper (31, 32) in einem Getriebegehäuse angeordnet ist.

7. Pendelarm (20) nach Anspruch 6, **dadurch gekennzeichnet, dass** das Getriebe (50) wenigstens eine weitere Getriebestufe (52, 53) umfasst, welche ein Zahnrad und ein Ritzel auf einer gemeinsamen Welle besitzt, wobei alle Getriebestufen (51, 52, 53) in einer satellitenförmigen Anordnung nebeneinander und außerhalb der Abtriebswelle (57) im Getriebegehäuse angeordnet sind.

8. Pendelarm (20) nach einem der Ansprüche 1 bis 7, **dadurch gekennzeichnet, dass** ein ringscheibenförmiger Bereich (25.1) und ein trapezförmige Bereich (25.2) des Getriebehalterelements (25) aus zwei aneinander liegenden Blechzuschnitten (25.10, 25.11) gebildet sind, wovon ein Blechzuschnitt (25.11) einen Flansch für das Getriebe (50) aufweist und der dahinter liegende Blechzuschnitt (25.11) im Bereich des Flanschs ausgespart ist.

9. Pendelarm (20) nach Anspruch 8, **dadurch gekennzeichnet, dass** sich eine zentrale Ausnehmung (25.8) im Getriebeträgerelement (25) als schmale Ausnehmung (25.7) zur Durchführung des Übertragungselements bis in den trapezförmigen Bereich (25.2) fortsetzt und dass die Ausnehmung (25.7) in einer Ausnehmung (25.5) in einer Flanschplatte (25.4) mündet.

10. Walzenverdichter (100) zum Verdichten von Abfallstoffen (30) in einem oben offenen Container (200), wenigstens umfassend:
- eine ortsfeste Stativeinheit (12);
- einen Tragarm (10), der über ein Gelenk (15) und wenigstens ein Aktorelement mit der Stativeinheit (12) verbunden ist und
- einen Pendelarm (20) mit einer Walzeneinheit (30) nach einem der vorhergehenden Ansprüche, der über das Schwenkgelenk (11) mit dem Tragarm (10) verbunden ist.

## Claims

1. Pendulum arm (20) for a roller compactor (100) for compacting waste materials (203) in an open-top container (200), at least comprising:
- a pivot joint (11), disposed on an upper end, for linking in a freely pivotable manner the pendulum arm (20) to a support arm (10) of the roller compactor (100);
- a roller unit (30) which on a gearbox holder element (25) is disposed on a lower end of the pendulum arm (20) and which has at least two rotatable roller members (31, 32) that are disposed on both sides of the gearbox holder element (25) and on the inside are configured so as to be at least partially hollow and that at least partially enclose at least one output shaft (57) and the bearings of the latter,
- and a motor unit;
**characterized**
- **in that** the motor unit (40) contains an electric motor (41) which is disposed on the pendulum arm (20) and which by way of a transmission element is connected to a gearbox (50),
- **in that** the gearbox (50) is disposed within the roller members (31, 32) and is fastened to the gearbox holder element (25) or is integrated in the gearbox holder element (25).

2. Pendulum arm (20) according to Claim 1, **characterized in that** the transmission element is a drive shaft (43) which is disposed so as to be parallel to the central axis of the pendulum arm (20) or is in alignment with the latter.

3. Pendulum arm (20) according to Claim 1 or 2, **characterized in that** the electric motor (41) is disposed on the end of the pendulum arm (20).

4. Pendulum arm (20) according to one of the preceding claims, **characterized in that** the pendulum arm (20) comprises at least two parallel and mutually connected support profiles (22) which at one end are connected to a head unit (26), on which receptacles (21) for configuring a pivot joint (11) are provided, and which at the other end are connected to a base unit (24), in which the electric motor (41) is disposed.

5. Pendulum arm (20) according to Claim 4, **characterized in that** a rotor shaft of the electric motor (41) is disposed so as to be parallel to the central axis of the pendulum arm (20) or is in alignment with the latter.

6. Pendulum arm (20) according to one of Claims 2 to 5, **characterized in that** the gearbox (50) is a gear mechanism which at least comprises:
- an input stage into which the drive shaft (43) discharges and which has a pair of bevel wheels and
- a first gear stage (51) having a gear wheel which is connected to the output shaft (57), and having a sprocket that engages therein, wherein the first gear stage (51) is disposed in a gearbox housing outside the output shaft (57) and within an internal circumference of the roller members (31, 32).

7. Pendulum arm (20) according to Claim 6, **characterized in that** the gearbox (50) comprises at least one further gear stage (52, 53) which has a gear wheel and a sprocket on a common shaft, wherein all gear stages (51, 52, 53) are disposed in the gearbox housing in a satellite-shaped arrangement next to one another and outside the output shaft (57) .

8. Pendulum arm (20) according to one of Claims 1 to 7, **characterized in that** an annular disc-shaped region (25.1) and a trapezoidal region (25.2) of the gearbox holder element (25) are formed from two sheet-metal blanks (25.10, 25.11) that bear on one another, of which one sheet-metal blank (25.11) has a flange for the gearbox (50) and the sheet-metal blank (25.11) lying therebehind is cut out in the region of the flange.

9. Pendulum arm (20) according to Claim 8, **characterized in that** a central clearance (25.8) in the gearbox support element (25) continues as a narrow clearance (25.7) for the lead-through of the transmission element into the trapezoidal region (25.2) and **in that** the clearance (25.7) opens into a clearance (25.5) in a flange plate (25.4).

10. Roller compactor (100) for compacting waste materials (30) in an open-top container (200), at least comprising:
- a stationary stand unit (12);
- a support arm (10) which by way of a joint (15) and at least one actuator element is connected to the stand unit (12) and
- a pendulum arm (20) having a roller unit (30) according to one of the preceding claims, which by way of the pivot joint (11) is connected to the support arm (10).

## Revendications

1. Bras de pendule (20) pour un compresseur à rouleaux (100) permettant de comprimer des déchets (203) dans un container (200) ouvert par en haut, comprenant au moins :
- une articulation pivotante (11) disposée au niveau d'une extrémité supérieure pour relier de façon librement pivotante le bras de pendule (20) à un bras porteur (10) du compresseur à rouleaux (100) ;
- une unité de rouleaux (30) qui est disposée au niveau d'un élément de support de boîte de vitesses (25) au niveau d'une extrémité inférieure du bras de pendule (20) et qui possède les au moins deux corps de rouleaux (31, 32) pouvant pivoter disposés des deux côtés de l'élément de support de boîte de vitesses (25) et réalisés à l'intérieur de façon au moins en partie creuse et entourant au moins en partie au moins un arbre d'entraînement en sortie (57) et son palier de roulement ;
- et une unité de moteur ;
**caractérisé en ce que** :
- l'unité de moteur (40) contient un moteur électrique (41) qui est disposé au niveau du bras de pendule (20) et est relié à une boîte de vitesses (50) via un élément de transmission ;
- la boîte de vitesses (50) est disposée à l'intérieur des corps de rouleaux (31, 32) et est fixée à l'élément de support de boîte de vitesses (25) ou est intégrée dans l'élément de support de boîte de vitesses (25).

2. Bras de pendule (20) selon la revendication 1, **caractérisé en ce que** l'élément de transmission est un arbre d'entraînement en entrée (43) qui est disposé parallèlement à l'axe central du bras de pendule (20) ou s'aligne avec lui.

3. Bras de pendule (20) selon la revendication 1 ou 2, **caractérisé en ce que** le moteur électrique (41) est disposé au niveau de l'extrémité du bras de pendule (20).

4. Bras de pendule (20) selon l'une quelconque des revendications précédentes, **caractérisé en ce que** le bras de pendule (20) comprend au moins deux profilés de support (22) parallèles et reliés entre eux qui sont reliés à une unité de tête (26) au niveau d'une extrémité et au niveau duquel des logements (21) sont prévus pour former une articulation pivotante (11) et reliés, au niveau de l'autre extrémité, à une unité de pied (24) dans laquelle le moteur électrique (41) est disposé.

5. Bras de pendule (20) selon la revendication 4, **caractérisé en ce qu'**un arbre de rotor du moteur électrique (41) est disposé parallèlement à l'axe central du bras de pendule (20) et s'aligne avec lui.

6. Bras de pendule (20) selon l'une quelconque des revendications 2 à 5, **caractérisé en ce que** la boîte de vitesses (50) est une boîte de vitesses à roue dentée qui comprend au moins :
- un étage d'entrée dans lequel l'arbre d'entraînement en entrée (43) débouche et qui comporte une paire de roues coniques ; et
- un premier étage de boîte de vitesses (51) avec une roue dentée qui est reliée à l'arbre d'entraînement en sortie (57) et avec un pignon s'engrenant à l'intérieur, le premier étage de boîte de vitesses (51) étant disposé à l'extérieur de l'arbre d'entraînement en sortie (57) et à l'intérieur d'un périmètre intérieur des corps de rouleaux (31, 32) dans un carter de boîte de vitesses.

7. Bras de pendule (20) selon la revendication 6, **caractérisé en ce que** la boîte de vitesses (50) comprend au moins un étage de boîte de vitesses (52, 53) supplémentaire qui possède une roue dentée et un pignon sur un arbre commun, tous les étages de boîte de vitesses (51, 52, 53) étant disposés côte à côte dans un agencement en forme de satellite et à l'extérieur de l'arbre d'entraînement en sortie (57) dans le carter de boîte de vitesses.

8. Bras de pendule (20) selon l'une quelconque des revendications 1 à 7, **caractérisé en ce qu'**une région (25.1) en forme de disque annulaire et une région (25.2) en forme de trapèze de l'élément de support de boîte de vitesses (25) sont formés à partir de deux détourés de tôle (25.10, 25.11) reposant l'un contre l'autre parmi eux un détouré de tôle (25.11) comporte un flasque pour la boîte de vitesses (50) et le détouré de tôle (25.11) reposant derrière est évidé dans la région du flasque.

9. Bras de pendule (20) selon la revendication 8, **caractérisé en ce qu'**un évidement (25.8) central se poursuit dans l'élément de support de boîte de vitesses (25) sous la forme d'un évidement étroit (25.7) pour le passage de l'élément de transmission jusque dans la région en forme de trapèze (25.2) et que l'évidement (25.7) débouche dans un évidement (25.5) prévu dans une plaque de flasque (25.4).

10. Compresseur à rouleaux (100) pour comprimer des déchets (30) dans un container (200) ouvert par en haut, comprenant au moins :
- une unité statique (12) fixe sur place ;
- un bras porteur (10) qui est relié à l'unité statique (12) via une articulation (15) et au moins un élément actionneur ;
- un bras de pendule (20) avec une unité de rouleaux (30) selon l'une quelconque des revendications précédentes qui est reliée au bras porteur (10) via l'articulation pivotante (11).
